# EUROPEAN PATENT SPECIFICATION

(11) **EP 0 358 169 B1**
(45) Date of publication and mention of the grant of the patent: **27.07.1994**
(21) Application number: 89116386.7
(22) Date of filing: 05.09.1989
(51) Int. Cl.: B65F 1/06, B65B 67/12, B62B 3/10

(54) **Portable litter basket**
Tragbarer Abfallbehälter
Panier à ordures portable

(30) Priority: 06.09.1988 JP 117125/88 U
(43) Date of publication of application: 14.03.1990
(73) Proprietor: Choi, Kwang Soo, Seoul (KR)
(72) Inventor: Choi, Kwang Soo, Seoul (KR)
(74) Representative: Grünecker, Kinkeldey, Stockmair & Schwanhäusser Anwaltssozietät

(56) References cited:
- DE-B- 1 083 183
- GB-A- 2 049 603
- US-A- 2 872 202
- US-A- 3 718 337
- US-A- 4 664 455

## Description

The present invention relates to a portable litter basket, which is easily collapsable.

Collapsable transporting device according to the preamble of claim 1 is known from DE-B-1083183. This known device has a bag, made of a flexible material and a collapsable carriage. The carriage comprises two rectangular frames, each frame having two parallel verticle rods connected by two horizontal rods. The brace members are provided to connect the frame, each brace member being connected rotatably with the lower portions of the rods and slidably with the upper portion of the opposite vertical rod. The allow a sliding movement, each rod is shaped as a tube in which a short rod, having a reduced diameter, is movably guided.

It is the object of the present invention, to provide a portable litter basket, which is convenient to carry with, and it makes it possible to erect a vynil bag to be stretched open as a litter basket.

This object is solved according to the invention by the subject matter of claim 1.

Preferred embodiments of the invention are subject matter of the sub-claims.

The invention is now further described in connection with the drawing, in which:
Fig. 1 shows a perspective view of an embodiment of the invention.
Fig. 2 shows a perspective view of the frame of said embodiment except a vynil bag.
Fig. 3 shows the state of said frame being collapsed.
Fig. 4 shows the connection between coil spring and slider or fixer.

The invention comprises a vynil bag 100, one side 110 thereof being open, other sides 120, thereof being closed, a plurality of support members 300, a plurality of braces 500 which consist of a pair of elongated bars 510 being pivoted each other on their centers 511, the upper portions 512 of said braces being slidably joined on the upper portions 301 of said support members, and the lover portions 513 of said braces being pivoted on the lower portions 302 of said support members, so that the distances between said support members be controlled by operation of said braces.

Said vynil bag 100 may be any kind of vynil bag, so long as it has a opening 110 in one side, being closed in other sides 120; but it would be desirable, if it secure a proper space, being holded on said support members 300.

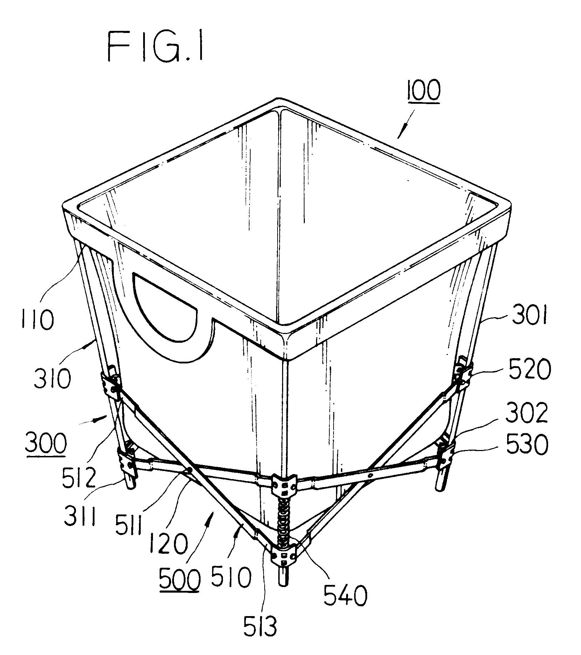

Said support members 300 consists of four rods 310 of equal length as shown fig. 1 ∼4, showing the first embodiment of the invention. In this case it is desirable to cover a set of caps 311 to the end of said rods to protect the surface of said vynil bag 100. said caps are made of rubber or plastics.

Said braces 500 consist of a pair of elongated bars 510 being pivoted with each other on their centers 511. The support members consist of four rods 310, four pairs of braces are joined to said rods. The upper portions of said bars 510 are pivoted to sliders 520 slidably joined to the upper portions of said rods 310, the lower portions thereof being pivoted to fixers 530 fixedly joined to the lower portions of said rods. A coil spring 540 is connected between said slider 520 and said fixer 530 on one of said rods, forcing said slider to be pushed toward said fixer, so that said rods be streched.

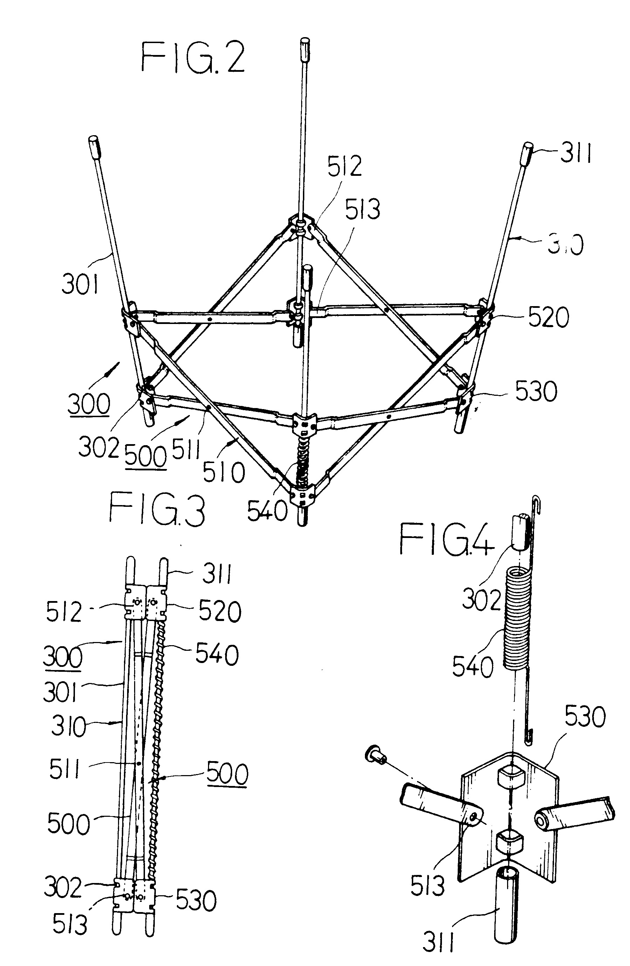

The litter basket according to the invention is carried at a proper place, being collapsed as shown fig. 3. The opening of a vynil bag is put over the support members. Said vynil bag is streched on the support members streched by sliding of the braces along them. In this case, the braces are slided down and stopped at a proper position by the force of the coil spring and by resistance of vynil bag as in the first embodiment, by cluching the connecting rod or pin into said groove as in the second embodiment, or by operation of said friction rod as in the third embodiment. Making said vynil bag upside down, the litter basket is completed.

It should be noted that the invention is a combination of a collapsible frame and a vynil bag streched thereon, the advantage thereof being to help people to erect a vynyl bag to be streched open at a proper place, to put their litter into said vynil bag, and dispose the bags at a proper place, thereby preventing the pollution of natural environment.

## Claims

1. A portable litter basket comprising:
a vinyl bag (100), one side (110) thereof being open, other sides (120) thereof being closed,
a plurality of support members (300) of equal length, said support members holding the opening of said vinyl bag to be stretched,
a plurality of brace members (500) consisting of a pair of elongated bars (510), being rotatably joined to each other on their centers, the upper portions (512) of said brace members being slidably joined to the upper portion (301) of said support members (300) and the lower portion (513) of said brace members (500) being rotatably joined on the lower portion (302) of said support members (300), so that the distance between said support members (300) is controlled by operation of said brace members (500);
**characterised in that** said support members (300) consist of four independent rods (310) having an equal and constant length,
four brace members are provided to connected said four rods,
sliders (520) and fixers (530) are provided, which are designed as brackets, encompassing said four rods (310), and
a coil spring (540) is connected between one of the sliders (520) and one of the fixers (530) along a support member, forcing said slider (520) to be drawn toward said fixer, so that said rods are forced apart.

2. A portable litter basket according to claim 1, further including a set of protection caps (311), covering each end of said rods (310).

3. A portable litter basket according to claim 2, wherein said protection caps (311) are made of rubber.

4. A portable litter basket according to claim 2, wherein said protection caps (311) are made of plastic.

## Patentansprüche

1. Tragbarer Abfallbehälter beinhaltend:
einen Vinylsack (100), welcher auf einer Seite (110) offen ist und welcher an den anderen Seiten (120) geschlossen ist,
eine Vielzahl von Stützelementen (300) von gleicher Länge, wobei diese Stützelemente die Öffnung dieses Vinylsackes im gespannten Zustand halten,
eine Vielzahl von Verbindungselemente (500), welche jeweils aus einem Paar von länglichen Stangen (510) bestehen, die drehbar miteinander in ihren Mittelpunkten verbunden sind, wobei die oberen Bereiche (512) dieser Verbindungselemente verschieblich mit dem oberen Bereich (301) dieser Stützelemente (300) verbunden ist, und der untere Bereich (513) dieser Verbindungselemente (500) drehbar mit dem unteren Bereich (302) dieser Stützelemente (330) verbunden ist, so daß die Entfernung zwischen diesen Stützelementen (300) durch die Tätigkeit dieser Verbindungselemente (500) gesteuert wird;
**dadurch gekennzeichnet,**
daß diese Stützelemente (300) aus vier unabhängigen Stangen (310) bestehen, welche gleiche und kontanste Länge aufweisen,
daß vier Verbindungselemente vorgesehen sind, um diese vier Stangen zu verbinden,
daß Schiebeelemente (520) und Befestigungselemente (530) vorgesehen sind, welche als Bügel gestaltet sind, die diese vier Stangen (310) umfassen, und
daß eine Schraubenfeder (540) zwischen einem der Schiebeelmente (520) und einem der Befestigungselemente (530) verbunden ist, entlang einem Stützelement, wodurch dieses Schiebeelement (520) so belastet wird, daß es zu diesem Befestigungselement gezogen wird, so daß diese Stangen auseinandergedrückt werden.

2. Tragbarer Abfallbehälter gemäß Anspruch 1, welcher weiterhin einen Satz von Schutzkappen (311) aufweist, welche jedes Ende dieser Stangen (310) abdeckt.

3. Tragbarer Abfallbehälter gemäß Anspruch 2, wobei diese Andeckkappen (311) aus Gummi bestehen.

4. Tragbarer Abfallbehälter gemäß Anspruch 2, wobei diese Abdeckkappen (311) aus Plastik gefertigt sind.

## Revendications

1. Panier à ordures portable comprenant :
un sac en vinyle (100), un côte (100) de celui-ci étant ouvert, ses autres côtés (120) étant fermés,
une pluralité d'éléments de support (300) de longueur égale. lesdits éléments de support maintenant l'ouverture dudit sac en vinyle pour qu'il soit déployé,
une pluralité d'éléments d'entretoise (500) composés d'une paire de barres allongées (510), réunies de manière rotative l'une a l'autre en leurs centres, les parties supérieures (512) desdits éléments d'entretoise étant reliées de façon coulissante à la partie supérieure (301) desdits éléments de support (300) et la partie inférieure (513) desdits éléments d'entretoise (500) étant reliée de manière rotative à la partie inférieure (302) desdits éléments de support (300), si bien que la distance entre lesdits éléments de support (300) est ajustée par la manoeuvre desdits éléments d'entretoise (500) ;
caractérisé en ce que lesdits éléments de support (300) sont formés de quatre tiges indépendantes (310) ayant une longueur égale et constante,
quatre éléments d'entretoise sont prévus pour relier lesdites quatre tiges,
des coulisses (520) et des fixations (530) sont prévues, lesquelles sent conçues comme des supports entourant lesdites quatre tiges (310), et
un ressort hélicoïdal (540) est relié entre une des coulisses (520) et une des fixations (530) le long d'un élément de support, ce ressort poussant ladite coulisse (520) à être tirée en direction de ladite fixation, si bien que lesdites tiges sont poussées à distance l'une de l'autre.

2. Panier a ordures portable selon la revendication 1, comprenant en outre un ensemble de capuchons de protection (311), recouvrant chaque extrémité desdites tiges (310).

3. Panier à ordures portable selon la revendication 2, dans lequel lesdits capuchons de protection (311) sont formés de caoutchouc.

4. Panier à ordures portable selon la revendication 2, dans lequel lesdits capuchons de protection (311) sont formés de matière plastique.
